# FASCICULE DE BREVET EUROPEEN

(11) **EP 1 742 884 B1**
(45) Date de publication et mention de la délivrance du brevet: **29.01.2020**
(21) Numéro de dépôt: 05738035.4
(22) Date de dépôt: 27.04.2005
(51) Int. Cl.: C03B 23/027

(54) **BOMBAGE DE FEUILLES DE VERRE**
BIEGEN VON GLASSCHEIBEN
BENDING GLASS SHEETS

(30) Priorité: 28.04.2004 BE 200400213
(43) Date de publication de la demande: 17.01.2007
(73) Titulaire: AGC Glass Europe, 1348 Louvain-la-Neuve (BE)
(72) Inventeur: MAZA, Christophe, B-6040 Jumet (BE)
(74) Mandataire: Bayot, Daisy
(86) Numéro de dépôt international: PCT/EP2005/051889
(87) Numéro de publication internationale: WO 2005/113460

(56) Documents cités:
- EP-A- 0 982 271
- WO-A-02/24588
- WO-A-03/076353
- FR-A- 876 917
- FR-A- 1 192 248
- GB-A- 859 100
- US-A- 3 173 781
- US-A- 3 307 930
- US-A- 3 325 267

## Description

La présente invention est relative à une technique de bombage de feuilles de verre, telle que celles utilisées notamment pour la formation de pare-brise ou de lunettes arrières d'automobile. Plus précisément, la présente invention concerne ce type de bombage lorsque au moins l'une des directions longitudinale ou transversale de la ou des feuilles de verre, présente une courbure importante.

Les constructeurs automobile, et les designers, recherchent de plus en plus des formes complexes et de grandes dimensions pour les vitrages des véhicules modernes. Ces tendances ont pour but en particulier d'élargir le champ visuel à l'intérieur du véhicule. Elles conduisent aussi à un accroissement significatif de la luminosité dans l'habitacle, et à l'impression d'espace qui en résulte.

Le formage de ces vitrages comportant simultanément de grandes dimensions et de fortes courbures pose de nouveaux problèmes et requiert en conséquence des techniques nouvelles.

Une difficulté particulière apparaît ainsi dans la production de vitrages panoramiques, c'est-à-dire, de vitrages comportant des parties latérales fortement incurvées par rapport à la partie centrale de ces vitrages. Cette difficulté tient en particulier à l'obtention d'une courbure de faible rayon sur toute la hauteur du vitrage, à distance des bords, courbure qui se conjugue par ailleurs avec une seconde courbure transversale par rapport à celle de faible rayon. La combinaison de ces courbures nécessite des soins particuliers pour éviter des déformations inacceptables.

Les techniques les plus usuelles pour former des vitrages panoramiques sont du type bombage par gravité. Dans ces techniques le verre est disposé sur un cadre comportant des extrémités mobiles. Les feuilles de verre planes reposent sur ces extrémités au début du processus. Le cadre portant les feuilles est introduit dans un four dont la température s'élève jusqu'à ramollissement du verre. Lorsque que les feuilles de verre sont suffisamment ramollies, les extrémités du cadre de bombage se relèvent automatiquement. Le mouvement des parties latérales du cadre est réalisé habituellement par le jeu du poids du verre et de sa rigidité d'une part, qui s'opposent au relèvement des extrémités du cadre, et par l'action de contrepoids d'autre part, qui tendent à l'inverse à relever ces extrémités.

Il est connu du document US3307930A un procédé de bombage de feuilles de verre dans lequel une ou plusieurs feuilles de verre, sont disposées sur un cadre dont le profil à la fin du processus correspond à celui que doit présenter la (les) feuille(s) sur leur périphérie, le cadre étant du type à parties latérales mobiles, passant d'une position dite ouverte au début du processus, à une position dite "fermée" à la fin de ce même processus, le cadre portant la (les) feuille(s) de verre est introduit dans un four dans lequel la température est progressivement élevée jusqu'à atteindre celle de ramollissement du verre qui sous son propre poids se déforme pour épouser à sa périphérie la forme du cadre, et dans lequel, lorsque la forme finale est atteinte, la température est rapidement réduite pour figer le verre.

Il est connu également du document US3325267 un procédé de bombage de feuilles de verres dans lequel le vitrage est chauffé après le mouvement du cadre.

Dans ces techniques traditionnelles, on comprend que la maîtrise des mouvements du cadre échappe aux opérateurs. Seuls la température et le choix de la masse des contrepoids déterminent le moment du relèvement des parties latérales. Ceci ne permet pas dans tous les cas, la mise en œuvre la plus satisfaisante pour obtenir le bombage demandé.

Ainsi, à ce stade du processus, la formation des courbures, notamment dans un sens orthogonal par rapport à celui de la courbure mise en oeuvre par ces extrémités articulées mobiles, n'est pas généralement achevée. Le relèvement des extrémités des feuilles modifie sensiblement leur exposition au rayonnement qui en assure le conditionnement thermique. Il en résulte qu'à ce stade de l'opération, le chauffage des feuilles ne s'effectue plus de façon uniforme, et le bombage ne s'opère plus convenablement, la gravité n'opérant à l'évidence plus de la même manière sur les parties des feuilles demeurant sensiblement dans un plan horizontal, et sur celles situées dans des plans tendant vers la verticale.

Différents moyens ont été proposés pour éviter ces difficultés. Parmi ceux-ci, le conditionnement thermique des feuilles de verre a été contrôlé de manière à assurer une meilleure uniformité au moyen de ce qui est nommé des « masses thermiques ». Il s'agit le plus simplement de plaques associées au cadre et qui ont pour fonction d'absorber une partie de l'énergie rayonnée. La localisation de ces plaques permet de limiter le ramollissement du verre, et par conséquent de contrôler dans une certaine mesure le mouvement de ces parties articulées. Il est ainsi possible de retarder un peu de la fermeture du cadre. On peut de cette façon obtenir une meilleure uniformisation de la température des feuilles. Mais, cette uniformisation des températures ne permet pas de résoudre la question de la composition des courbures dans la partie comportant les rayons les plus faibles. Le retard au ramollissement intervient en effet aussi bien dans les deux directions, et les deux courbures restent contrôlées par le seul ramollissement du verre.

Toujours pour la formation de ces vitrages de type panoramique, il a été proposé de contrôler la courbure des extrémités en maintenant les feuilles bloquées sur le cadre. Cette opération avait pour but d'éviter que le mouvement de ces extrémités du verre, dans l'impulsion donnée par le relèvement du cadre, n'excède la courbure recherchée.

Certaines techniques ont encore été envisagées selon lesquelles les feuilles de verre sont soumises à des pressions exercées à leurs extrémités pour forcer la courbure à un stade de précoce, le ramollissement n'étant pas encore atteint, qui permette un bombage sous l'effet du poids du verre. Cette déformation provoquée n'est possible que pour les vitrages ne présentant qu'une seule direction de courbure, à savoir celle correspondant aux mouvements de ces extrémités.

On comprend que les solutions proposées antérieurement ne résolvent par le problème envisagé selon l'invention. Selon celle-ci, il s'agit en effet de permettre la réalisation de vitrages de type panoramique comportant des courbures composées significatives. L'invention a pour but de fournir une technique permettant de résoudre les difficultés énoncées dans la production de ce type de vitrages.

Le but de l'invention est atteint dans une technique de bombage par gravité sur cadre articulé, technique dans laquelle il est fait en sorte de contrôler la fermeture du cadre, de façon indépendante de l'état de ramollissement du verre.

Selon l'invention, en particulier, il est proposé de retarder la fermeture du cadre alors que le verre est déjà suffisamment ramolli pour que son poids ne suffise plus pour s'opposer à cette fermeture. Dans cette opération, les feuilles de verre initialement disposées de façon sensiblement horizontale sur le cadre, sont maintenues dans cette position aussi longtemps qu'il apparaît nécessaire à la mise en condition de la feuille de verre, et notamment à la formation de la courbure transversale à celle qui est complétée lors de la fermeture du cadre.

En position horizontale les feuilles sont exposées au rayonnement émis par la voûte et la sole du four qui constituent les éléments traditionnellement générateurs de l'essentiel du rayonnement thermique. Il est possible dans cette disposition de bien maîtriser l'apport thermique en tout point de la surface du verre.

La distribution recherchée est souvent une distribution homogène. Dans ce cas le chauffage de la voûte et de la sole est réglé de façon également uniforme. Ceci est obtenu en disposant régulièrement les éléments chauffant et/ou, en combinant la disposition de ces moyens avec le réglage de la puissance qu'ils dissipent individuellement.

Néanmoins dans d'autres cas, il est préférable que l'apport thermique soit plus important dans certaines parties de la surface du verre. C'est éventuellement le cas des zones devant supporter des courbures très accentuées. Dans ce cas l'intensité du rayonnement et de l'apport thermique peut être localement plus important. Ceci, encore une fois, est obtenu par la distribution des moyens chauffant et/ou par le réglage de la puissance délivrée par ces moyens pris individuellement.

Compte tenu de ce que la distance des feuilles à ces parois est sensiblement la même en tout point des feuilles, il est possible d'atteindre des conditions de température relativement bien maîtrisées sur l'ensemble de la feuille. De plus le mouvement de relèvement des extrémités du cadre étant retenu au-delà du ramollissement de la feuille, la feuille peut être amenée à des températures supérieures à celles des techniques traditionnelles lors du déclenchement du relèvement des parties latérales mobiles du cadre.

Les dispositions selon l'invention, en maintenant les feuilles de verre de manière globalement horizontale, permettent de faire en sorte que l'effet de la gravité soit maintenu de manière régulière sur toute la surface pendant le temps nécessaire pour développer les bombages dans toutes les directions, avant d'imposer une courbure très accentuée, qui s'apparente à un « pliage » de la feuille, dans les parties latérales. Ainsi pour une température et un ramollissement uniformes, la gravité tend à développer des profils réguliers en « chaînette » entre deux points supports opposés. Si la « fermeture » du moule n'est commandée que par le ramollissement du verre, le bombage des parties latérales du verre relevées avec les parties latérales du cadre, modifie sensiblement l'orientation des forces de gravité par rapport au plan de la feuille de verre. Sur ces parties latérales, d'une direction qui à l'origine est sensiblement orthogonale au plan de la feuille, les forces viennent à s'exercer suivant un angle de plus en plus réduit au fur et à mesure du relèvement des parties mobiles du cadre. Ces forces peuvent à la fin du processus se situer dans le plan général des parties latérales de la feuille la feuille si, dans les cas extrêmes, la courbure imposée conduit les côtés pratiquement à la verticale. On comprend dans ces conditions que le bombage de ces parties « prématurément » relevées, n'évolue plus de la même manière que le reste du verre. En d'autres termes plus les parties latérales se rapprochent d'une disposition verticale, moins la gravité contribue au bombage de ces parties ainsi redressées. Pour ces raisons, il peut être très important de maintenir le cadre supportant le verre dans la position initiale, alors que le ramollissement aurait déjà abouti au relèvement des parties latérales.

L'invention est décrite de manière plus détaillée dans la suite en faisant référence aux figures annexées dans lesquelles :
la figure 1 est une vue en perspective d'un vitrage de forme panoramique moderne;
la figure 2 est une vue schématique en perspective d'un cadre articulé traditionnel pour la formation de vitrages à bombage longitudinal accentué;
la figure 4 montre schématiquement un exemple de construction d'un dispositif destiné à commander le mouvement des parties articulées du cadre ;
la figure 5 présente de façon schématique un cadre à parties mobiles comportant plusieurs supports agissant séparément pour conférer des profils progressivement plus accentués.

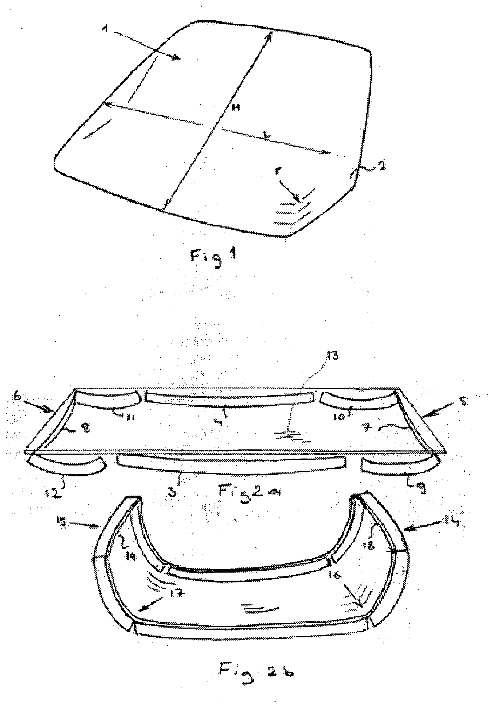

La figure 1 montre un pare-brise typique de véhicules récents. Ces pare-brise sont très inclinés pour conférer un meilleur profil de pénétration du véhicule. Cette inclinaison très importante a pour conséquence une hauteur H relativement grande par apport à celle des véhicules antérieurs. Ce pare-brise (1) se caractérise aussi par une double courbure. La courbure dans le sens de la hauteur est relativement limitée. Elle est cependant bien présente comme cela ressort du profil que l'on distingue sur la gauche de la figure. Cette courbure se conjugue avec celle imposée dans la largeur du pare-brise L. Le pare-brise comporte dans la largeur deux parties latérales ou « ailes » rabattues (2). Les ailes (2) se situent sensiblement dans des plans à angle droit par rapport au plan général du pare-brise. Cette conformation entraîne la présence d'une courbure de petit rayon r, à la jonction de la partie principale du pare-brise (1) et de ces ailes (2).

Les difficultés de production de ce type de pare-brise sont liées principalement à la combinaison des courbures longitudinales et transversales, et à cette courbure particulièrement accentuée liée à la présence de ces ailes (2). A cela s'ajoutent les difficultés communes aux pare-brise de grandes dimensions.

Il est connu de produire des vitrages qui comportent une courbure de faible rayon à proximité immédiate d'un ou plusieurs bord du vitrage, en particulier pour « accoster » la structure métallique du véhicule de façon à produire une bonne continuité du profil (« flush »). Ces courbures sont néanmoins beaucoup plus aisées à réaliser que celles qui se situent à distance des bords. La courbure proche des bords se situe typiquement à quelques centimètres au plus de ce bord. Des distances typiques sont de l'ordre de 20 à 50mm. A l'opposé, dans les vitrages panoramiques considérés selon l'invention, la courbure de faible rayon qui raccorde les ailes à la partie centrale du vitrage, peut être distante des extrémités de plusieurs dizaines de centimètres. Dans ces conditions les courbures composées soulèvent toutes les difficultés indiquées précédemment. De fait, dans le cas des courbures proches des bords, les exigences de qualité optique sont beaucoup moindres que pour les parties situées dans les zones de vision qui sont bien concernées par les vitrages panoramique visés par l'invention.

La figure 2 illustre le principe de bombage sur cadre comportant des parties mobiles pour le bombage de pare-brise à forte courbure latérale. Les deux temps du bombage sont illustrés respectivement aux figures 2a et 2b.

Le cadre sur lequel s'effectue le bombage représenté schématiquement, comporte deux traverses longitudinales (3,4) fixes, et des éléments articulés mobiles (5,6). Ces derniers dans la forme présentée, sont constitués de traverses d'extrémité (7,8) et d'éléments (9,10,11,12) destinés à prolonger les traverses fixes (3,4), lorsqu'à la fin du procédé l'ensemble constitué par les traverses fixes (3,4) et les éléments articulés mobiles (5,6) reproduit les contours périphériques du vitrage final.

La figure 2a correspond à la phase initiale du procédé. Le cadre est présenté dans une position dite "ouverte". Dans cette position, les extrémités mobiles sont rabattues. La feuille de verre plane repose sur les extrémités (5,6) du cadre. Le cas échéant, la feuille repose également sur les extrémités des traverses longitudinales aux points correspondant sensiblement aux jonctions entre les traverses fixes (3,4) et les extrémités articulées (5,6). Traditionnellement, les parties mobiles latérales sont maintenues en position ouverte sous le poids de la feuille de verre. Le poids de la feuille s'oppose au redressement des parties mobiles (5,6) auxquelles sont associés des contrepoids (non représentés) tendant à redresser ces parties mobiles.

Le cadre supportant la feuille de verre comme il vient d'être indiqué pénètre dans un four. La progression dans le four s'accompagne d'une élévation progressive de température. Lorsque celle-ci atteint la température de ramollissement de la feuille de verre, la partie centrale de la feuille s'affaisse et se rapproche des traverses fixes (3,4) du cadre. A ce stade la feuille n'exerce plus une pression suffisante sur les extrémités articulées (5,6) pour s'opposer à l'action des contrepoids attachés à celles-ci, et les extrémités mobiles se relèvent progressivement.

Lorsque des parties mobiles sont complètement relevées, elles se positionnent dans le prolongement des traverses fixes (3,4) comme représenté à la figure 2b. Le cadre correspond alors à la forme définitive de la périphérie du vitrage. La feuille de verre (13) continuant de s'affaisser vient s'appliquer sur le cadre.

Lorsque le bombage est achevé, la feuille est rapidement figée dans cette forme définitive.

Aux figures 2 le bombage représenté comporte deux courbures, une courbure dans la largeur du vitrage présentant une partie médiane relativement peu accentuée, et latéralement, des ailes (14,15) prolongeant cette partie médiane par des ailes (16,17), la partie médiane se raccordant à ces ailes par une zone à faible rayon, et une courbure relativement peu accentuée dans la hauteur du vitrage.

Le vitrage représenté comporte une courbure dans les deux directions longitudinale et transversale. La courbure transversale apparaît notamment à l'extrémité des parties mobiles du cadre. Les traverses de (18) et (19) de ces extrémités (14) et (15) sont représentées incurvées pour matérialiser cette courbure transversale. En pratique, l'incurvation transversale du vitrage ne nécessite pas une conformation des traverses (18) et (19) telle que représentée. Lorsque que la courbure transversale reste limitée, le simple effet de la gravité sur la feuille de verre ramollie, suffit à entraîner la formation de cette courbure transversale. Lorsque que la courbure transversale est sensiblement plus accentuée, l'utilisation de traverses d'extrémité (18,19) incurvées est cependant préférable conjointement avec des moyens permettant d'éviter la formation de contre-bombage, phénomène bien connu lorsqu'on impose à une feuille de verre le bombage simultané suivant deux courbures de direction différentes.

En première approximation, et pour des formes de vitrage relativement simples, comme celle représentée aux figures 2, on s'efforce en général de maintenir un chauffage aussi uniforme que possible de la feuille (13) au cours de sa progression dans le four. Au début de celle-ci, la feuille plane sensiblement parallèle à la voûte et à la sole du four reçoit de façon uniforme le rayonnement qui constitue l'essentiel de l'apport thermique. L'uniformité de ce rayonnement est assurée par le réglage et la localisation appropriée des éléments assurant le chauffage du four.

Les conditions de chauffage uniformes se maintiennent autant que la feuille reste plane.

Lorsque que sous l'effet de l'élévation de la température la feuille se ramollit et des parties articulées du cadre se redressent, la distance séparant les parties latérales de la feuille de verre de la voûte du four se trouve réduite par rapport à celle de la partie centrale. Mais surtout, les surfaces correspondant à ces parties latérales du vitrage ne sont plus directement exposées au rayonnement émanant de la voûte ou de la sole. L'incidence du rayonnement devient rasante. La quantité d'énergie par unité de surface reçue par la feuille de verre sur ces parties latérales redressées est alors considérablement réduite. Il est cependant important que ces parties latérales soient convenablement portées à des températures relativement élevées par rapport aux parties centrales du vitrage, pour assurer la formation convenable de la courbure à faible rayon des zones (16) et (17).

Plus encore, le relèvement des ailes (14) et (15) à un stade ou le bombage notamment dans le sens de la hauteur du pare-brise n'est pas achevé peut, perturber ce bombage, au moins sur les parties latérales concernées. En effet, le relèvement de ces ailes dans une direction qui s'approche de la normale par rapport au plan initial du verre, autrement dit, dans une direction voisine de la verticale, modifie sensiblement les mécanismes de déformation du verre qui sont liés à la gravité. La position quasi verticale interrompt notamment la formation de la convexité le long de la zone de raccordement de la partie médiane et des ailes, ainsi que des ailes elles-mêmes.

Une interruption du bombage par relèvement « prématuré » des parties mobiles peut conduire dans ces zones (16) et (17) à des défauts de type de contre-bombage. En l'occurrence, de tels défauts correspondraient par exemple à une convexité insuffisante ou déformée sur le vitrage final dans les zones de faible rayon de courbure. Sur la figure un tel défaut serait perçu par exemple sur le profil à gauche de la figure.

Des moyens ont été proposés antérieurement pour tenter de remédier à ces difficultés. Comme indiqué précédemment, ils ont pour objet le plus souvent des modifications relatives à la distribution de l'énergie rayonnée par mise en oeuvre de chauffage localisé plus ou moins intense suivant les zones exposées à ce rayonnement. De telles dispositions permettent certainement une meilleure distribution des températures de la feuille de verre. Elles ne permettent cependant pas de maîtriser parfaitement la cinétique de positionnement des parties latérales en fonction de l'évolution du bombage tout au long du processus.

Selon l'invention, les modalités analysées précédemment à propos de la figure 2a sont en partie reproduites. Les dispositions initiales de la feuille de verre par rapport aux éléments du cadre sont tout à fait analogues. Cependant, les parties latérales articulées font l'objet de mouvements qui ne sont plus le seul fait du poids du verre, de son ramollissement, et de l'action de contrepoids. Selon l'invention de, le mouvement de ces parties latérales articulées (5) et (6) est commandé mécaniquement, selon un programme qui tient compte des températures de la feuille de verre sur l'ensemble de celle-ci, et particulièrement dans les zones devant subir un bombage particulièrement accentué et plus encore de l'état d'avancement de la formation des courbures.

En pratique, ceci correspond le plus souvent à retarder le redressement des parties mobiles du cadre par rapport au mouvement qui s'opérerait dans les conditions exposées précédemment. En maintenant la feuille de verre exposée au rayonnement incident de la façon la plus intense possible, on accélère la formation des courbures. On comprend que l'on peut éviter les difficultés indiquées à propos des techniques antérieures. De surcroît, le fait de maintenir la totalité de la feuille de verre dans une position sensiblement parallèle à la voûte et à la sole du four au-delà du début du ramollissement permet d'atteindre plus rapidement les températures adéquates pour la formation des courbures accentuées dans les zones (16) et (17). De la sorte, non seulement il est possible d'éviter la formation des défauts de bombage, mais encore l'ensemble du processus peut-être avantageusement modifié.

La mise en œuvre du procédé selon l'invention peut faire l'objet de caractéristiques supplémentaires destinées encore à améliorer la formation des vitrages. Il s'agit en particulier de suivre le processus de bombage de manière à adapter le cadre à l'évolution du ramollissement du verre.

En se reportant aux figures 2, on comprend que le verre disposé sous forme de feuilles planes rigides, est maintenu à l'origine par quelques points périphériques. A la fin du processus toute la périphérie repose sur le cadre en position fermée. Entre ces deux extrêmes le verre se ramollit et tend à se rapprocher du cadre.

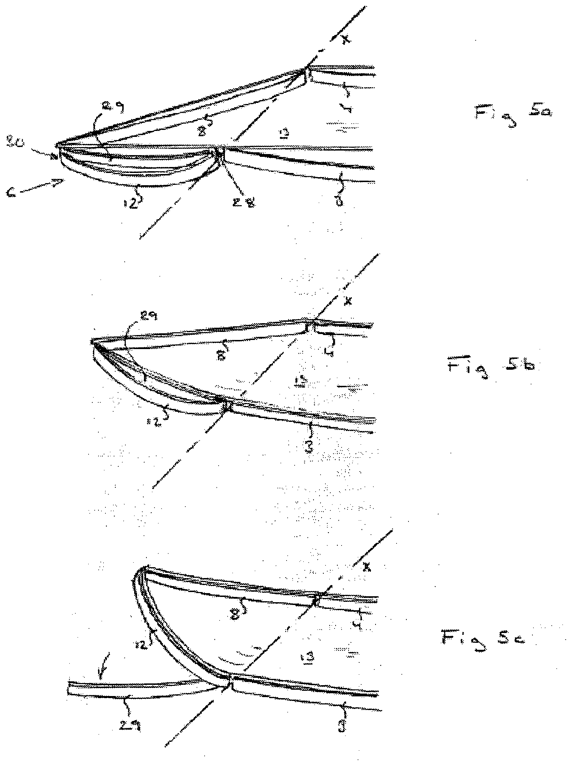

La figure 5 illustre un mode de mise en œuvre de l'invention comportant des moyens de contrôle supplémentaires du bombage.

Dans la forme représentée à la figure 5 le verre initial est découpé de façon trapézoïdale pour conduire à un vitrage tel que représenté à la figure 1. Dans cette forme, les zones de faible rayon de courbure qui séparent la partie centrale du vitrage, des parties latérales se situent à proximité de l'axe X de rotation des parties mobiles du cadre.

Lorsque le cadre est maintenu ouvert, alors que le ramollissement du verre tendrait au redressement des parties latérales mobiles, il est préférable de ne pas retenir la fermeture du cadre jusqu'au point où les parties latérales du verre viendraient à reposer sur les éléments correspondants du cadre. L'affaissement du verre à ce stade conduirait à une déformation aiguë au point de jonction (28) des parties mobiles du cadre et des parties fixes de celui-ci. Cette déformation, d'autant plus importante que le redressement est lui même plus accentué, pourrait entraîner un défaut sous forme d'un « pli » même après le redressement final des parties latérales.

Pour éviter ce « pli » indésirable, il est possible de procéder au redressement en plusieurs temps. Le contrôle de la fermeture du cadre permet en effet d'imposer la cinétique que l'on souhaite pour suivre l'évolution du verre. Ainsi par exemple tout en retardant la fermeture du cadre par rapport au ramollissement du verre, il est possible d'engager progressivement cette fermeture au moins de manière partielle pour limiter l'importance du « pli » évoqué précédemment. Le redressement peut conduire par exemple à limiter dans un premier temps le mouvement des parties mobiles à la moitié du mouvement de rotation complet, à temporiser la suite de la rotation pour accentuer le bombage du verre en maintenant celui-ci dans une position où la gravité joue encore un rôle essentiel pour le bombage dans la hauteur, et puis seulement après que la courbure dans la hauteur atteint le degré recherché, à finir le redressement d'une façon plus ou moins rapide.

Une manière alternative ou complémentaire pour prévenir la formation de ce type de défaut consiste à disposer de moyens supports intermédiaires (29) sur les parties mobiles du cadre, moyens qui momentanément maintiennent le verre à distance du cadre définitif en minimisant l'affaissement du verre. Ces supports intermédiaires sont particulièrement utiles dans les zones où la courbure présente un faible rayon. Dans l'exemple de la figure 5, il s'agit de la partie mobile (12) du cadre.

Les moyens supports intermédiaires(29), une traverse articulée sur l'élément (12) de l'extrémité mobile (6), par exemple, retiennent le verre à la périphérie sur les parties mobiles du cadre jusqu'à un certain degré de redressement de ces parties mobiles. Les moyens supports (29) étant moins incurvés que l'élément (12), ou même, non incurvés, ils permettent de réduire le pliage à la jonction des parties fixes et mobiles du cadre. Idéalement, à la fin de la première partie du processus, ces moyens intermédiaires (29) se situent dans le prolongement des parties fixes (3) du cadre, évitant tout risque de formation de ce pli.

Les moyens supports intermédiaires (29) sont ensuite escamotés pour dégager l'élément (12) définitif correspondant, et laisser le verre poursuivre sa mise en forme jusqu'à venir en contact avec cette partie du cadre.

Les différentes étapes font l'objet des figures 5a, b et c. En 5a, au début du processus la feuille de verre 13 est plane, elle repose à l'extrémité (30) de la partie mobile (12). Elle repose aussi aux points de jonction entre la partie fixe (3,4) et la partie mobile du cadre. C'est en cet emplacement, et particulièrement au point (28) que le risque existe de plier le verre de manière non réversible si l'on poursuit le ramollissement du verre et son affaissement jusqu'au cadre (3 et 12).

Pour atténuer l'effet de pliage, il est possible de procéder de manière contrôlée (ou non) à un relèvement partiel de l'extrémité (6) du cadre. En réduisant l'angle au point de jonction on réduit également le risque de formation d'un pli irréversible. Il est possible aussi, alternativement ou de manière simultanée, de supporter la feuille ramollie comme représenté en 5b, par la traverse (29).

Avantageusement, la traverse (29), à cette première étape, est disposée de sorte que le support offert au verre se fasse sans pliage, le profil de la traverse se situant dans le prolongement de celui de la partie fixe (3).

La suite du processus comprend la fin du relèvement de l'extrémité (6) et le dégagement de l'élément (12) par abaissement de la traverse (29). L'ordre de ces opérations est fonction du cas considéré. L'abaissement de la traverse (29) précède nécessairement la mise n position quasi verticale de l'extrémité (6). Lorsque la position finale du relèvement est sensiblement moindre, l'abaissement peut avoir lieu à un moment du relèvement qui peut se situer même après que celui-ci soit achevé. En pratique la formation des vitrages panoramiques conduisant à un relèvement très prononcé, l'abaissement de la traverse (29) précède la fin du relèvement et de préférence intervient avant que la rotation ait dépassé un angle de 45 degrés.

Les différents modes conduisant à la fermeture du cadre peuvent s'enchaîner sans discontinuité ou, à l'inverse, s'effectuer par séquences distinctes. Cette dernière façon de procéder est particulièrement adaptée à une progression des cadres dans un four section par section, le cadre s'immobilisant à chaque section pendant un temps déterminé, par exemple une minute, puis étant convoyé jusqu'à la section suivante. Dans ce cas le mécanisme de commande du cadre est adapté de telle sorte qu'il puisse être actionné dans chaque section du four où il est prévu de modifier la position des parties latérales du cadre.

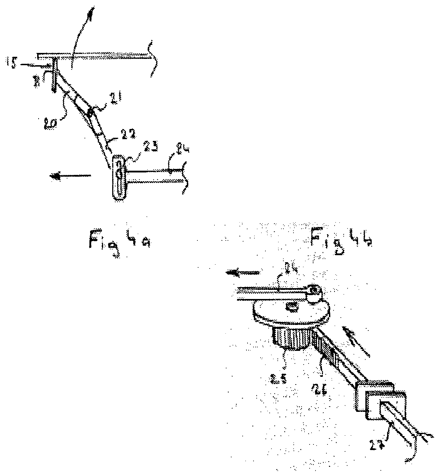

En pratique, s'il est possible de contrôler de bout en bout le processus de relèvement des parties latérales, par exemple comme il est précisé plus loin à propos de la figure 4, le mouvement de celui-ci peut en partie être conduit de manière traditionnelle, autrement dit, il peut être réalisé par le jeu du ramollissement du verre et l'action des contrepoids. Une façon éventuelle est ainsi de procéder dans un premier temps et pour une fraction seulement du mouvement, au redressement partiel par les moyens traditionnels. Ce peut être par exemple le cas lorsque l'on veut opérer en plusieurs étapes comme indiqué ci-dessus pour éviter la formation de pli. Dans ce cas le mouvement des parties latérales est bloqué à un moment du redressement, puis est contrôlé ensuite pour retarder la suite de ce redressement.

La figure 4 montre un mode de contrôle mécanique des parties latérales du cadre. Seuls sont représentés les éléments mobiles de ce mécanisme à l'exclusion de tous les éléments qui en constituent le support, pour la clarté de la présentation.

La partie latérale mobile (15) est associée à un bras de levier (20) en équerre. Le mouvement de rotation est assuré autour d'un axe (21). Le bras (22) de l'équerre, est engagé à son extrémité dans un coulisseau (23). Le coulisseau est solidaire d'une bielle (24). L'extrémité de cette bielle est articulée sur un plateau mobile en rotation. Le plateau est entraîné par l'intermédiaire d'un système de crémaillère (25, 26). La crémaillère est actionnée par un piston (27).

Toutes les pièces du mécanisme décrit précédemment, sont portées par le cadre et son bâti. Seul le piston (27) est indépendant de cet ensemble. Il s'agit d'un mécanisme qui avantageusement est motorisé de l'extérieur du four, à travers les parois de celui-ci.

On comprend que ce mode n'est qu'une des possibilités de réalisation. Des moyens équivalents sont par exemple les systèmes à vis sans fin, des entraînements par engrenage etc. Le choix dans ce domaine est conditionné principalement par la nécessité de mettre en œuvre des moyens susceptibles de supporter sans dommage et sans entretien contraignant, les conditions qui sont celles imposées par les passages répétés dans le four.

L'invention permet de produire des vitrages de type « panoramique » avec des courbures composées ou complexes, comportant notamment des petits rayons de courbure à distance des bords.

Les vitrages obtenus conservent les courbures convexes recherchées et ceci même le long des parties comportant ces courbures à faible rayon. La mise en oeuvre de l'invention montre que la formation de cette zone à faible rayon de courbure en fin de processus modifie encore la convexité de l'autre courbure dans cette zone particulière. Néanmoins la modification que l'on constate est sensiblement réduite, et ne conduit pas à une inversion de courbure de type « contre-bombage », autrement dit, la forme convexe est conservée même si la convexité est un peu atténuée au cours de la formation de cette courbure de faible rayon.

## Revendications

1. Procédé de bombage par gravité de feuilles de verre dans lequel une ou de plusieurs feuilles de verre (13), sont disposées sur un cadre dont le profil à la fin du processus correspond à celui que doit présenter la (les) feuille(s) sur leur périphérie, le cadre étant du type à parties latérales mobiles (5, 6), passant d'une position dite « ouverte » au début du processus, à une position dite « fermée » à la fin de ce même processus, le cadre portant la (les) feuille(s) de verre est introduit dans un four dans lequel la température est progressivement élevée jusqu'à atteindre celle de ramollissement du verre qui sous son propre poids se déforme pour épouser à sa périphérie la forme du cadre, et dans lequel, lorsque la forme finale est atteinte, la température est rapidement réduite pour figer le verre, procédé **caractérisé en ce que** le mouvement des parties latérales du cadre est, au moins pour partie, contrôlé indépendamment de l'état de ramollissement du verre. et dans lequel le mouvement des parties latérales (5, 6) du cadre est retardé par rapport au mouvement qui suivrait le seul ramollissement du verre.

2. Procédé selon la revendication la revendication 1 dans lequel le mouvement des parties latérales (5, 6) du cadre est entamé après que les courbures, à l'exception de celles correspondant à ce mouvement, sont pratiquement achevées.

3. Procédé selon l'une des revendications précédentes dans lequel le mouvement des parties latérales (5, 6) du cadre est conduit suffisamment rapidement pour que le bombage obtenu précédemment à ce mouvement, n'évolue pas sensiblement au cours de ce mouvement ou après celui-ci.

4. Procédé selon l'une des revendications précédentes dans lequel immédiatement après le mouvement des parties latérales (5, 6) du cadre le refroidissement du verre est entrepris.

5. Procédé selon la revendication 1 dans lequel le mouvement des parties latérales (5, 6) du cadre comporte plusieurs étapes, un premier mouvement partiel étant entrepris de façon à réduire la discontinuité de courbure du verre occasionnée à la jonction entre les parties fixes et les parties latérales mobiles (5, 6) du cadre.

6. Procédé selon la revendication 5 dans lequel le premier mouvement partiel est conduit par l'action combinée du ramollissement du verre et de l'action de contrepoids.

7. Procédé selon l'une des revendications précédentes dans lequel le cadre comporte sur ses les parties mobiles (5, 6) un ou plusieurs double jeu (24, 12) de supports, ces supports intervenant les uns après les autres pour supporter le verre à la périphérie de celui-ci, et suivant une succession imposant un profil courbé de plus en plus accentué.

8. Procédé selon la revendication 7 dans lequel, le mouvement final des parties latérales mobiles est réalisé après que les supports successifs (24, 12) portés par ces parties latérales mobiles, aient été mis en œuvre jusqu'à obtenir le profil le plus accentué le long de ces parties mobiles.

9. Procédé selon la revendication 5 ou la revendication 6 et la revendication 7, dans lequel un premier support de courbure limitée, supporte le verre le long d'une partie au moins des parties mobiles du cadre à la fin du premier mouvement partiel de ces parties mobiles, ce premier support étant alors escamoté pour dégager un support de courbure plus accentuée et libérer le verre pour la suite du mouvement des parties mobiles.

10. Procédé selon l'une quelconque des revendications précédentes dans lequel le mouvement des parties mobiles du cadre est déclenché lorsque le verre atteint une température déterminée.

## Patentansprüche

1. Verfahren zum Biegen von Glasscheiben aufgrund der Schwerkraft, bei dem eine oder mehrere Glasscheiben (13) auf einem Rahmen angeordnet werden, dessen Profil am Ende des Vorgangs dem entspricht, das die Scheibe(n) an ihrem Umfang aufweisen soll(en), wobei der Rahmen vom Typ mit beweglichen Seitenteilen (5, 6) ist, die aus einer sogenannten "offenen" Position zu Beginn des Vorgangs in eine sogenannte "geschlossene" Position am Ende desselben Vorgangs übergehen, wobei der die Glasscheibe(n) tragende Rahmen in einen Ofen eingeführt wird, in welchem die Temperatur zunehmend erhöht wird, bis die Erweichungstemperatur des Glases erreicht ist, das sich unter seinem Eigengewicht verformt, um sich an seinem Umfang der Form des Rahmens anzupassen, und bei dem die Temperatur, wenn die endgültige Form erreicht ist, schnell verringert wird, um das Glas erstarren zu lassen, wobei das Verfahren **dadurch gekennzeichnet ist, dass** die Bewegung der Seitenteile des Rahmens zumindest teilweise unabhängig vom Erweichungszustand des Glases gesteuert wird, und wobei die Bewegung der Seitenteile (5, 6) des Rahmens in Bezug auf die Bewegung, die dem bloßen Erweichen des Glases folgen würde, verzögert ist.

2. Verfahren nach Anspruch Anspruch 1, bei dem die Bewegung der Seitenteile (5, 6) des Rahmens eingeleitet wird, nachdem die Krümmungen, mit Ausnahme der dieser Bewegung entsprechenden, praktisch abgeschlossen sind.

3. Verfahren nach einem der vorhergehenden Ansprüche, bei dem die Bewegung der Seitenteile (5, 6) des Rahmens ausreichend schnell durchgeführt wird, damit sich die vor dieser Bewegung erhaltene Biegung während dieser Bewegung oder danach nicht wesentlich ändert.

4. Verfahren nach einem der vorhergehenden Ansprüche, bei dem sofort nach der Bewegung der Seitenteile (5, 6) des Rahmens die Abkühlung des Glases vorgenommen wird.

5. Verfahren nach Anspruch 1, bei dem die Bewegung der Seitenteile (5, 6) des Rahmens mehrere Schritte umfasst, wobei eine erste Teilbewegung derart vorgenommen wird, dass die an der Verbindungsstelle zwischen den festen Teilen und den beweglichen Seitenteilen (5, 6) des Rahmens bewirkte Krümmungsdiskontinuität des Glases verringert wird.

6. Verfahren nach Anspruch 5, bei dem die erste Teilbewegung durch die kombinierte Wirkung des Erweichens des Glases und der Gegengewichtswirkung durchgeführt wird.

7. Verfahren nach einem der vorhergehenden Ansprüche, bei dem der Rahmen an seinen den beweglichen Teilen (5, 6) einen oder mehrere doppelte Sätze (24, 12) Stützen umfasst, wobei diese Stützen nacheinander eingreifen, um das Glas an dessen Umfang zu stützen, und gemäß einer Aufeinanderfolge, die ein immer ausgeprägter gekrümmtes Profil erzwingt.

8. Verfahren nach Anspruch 7, bei dem die Schlussbewegung der beweglichen Seitenteile ausgeführt wird, nachdem die von diesen beweglichen Seitenteilen getragenen, aufeinander folgenden Stützen (24, 12) eingesetzt worden sind, bis das am stärksten ausgeprägte Profil entlang dieser beweglichen Teile erhalten wird.

9. Verfahren nach Anspruch 5 oder Anspruch 6 und Anspruch 7, bei dem eine erste Stütze mit begrenzter Krümmung das Glas entlang mindestens eines Teils der beweglichen Teile des Rahmens am Ende der ersten Teilbewegung dieser beweglichen Teile stützt, wobei diese erste Stütze daraufhin eingezogen wird, um eine Stütze mit stärker ausgeprägter Krümmung freizusetzen und das Glas zur Fortsetzung der Bewegung der beweglichen Teile freizugeben.

10. Verfahren nach einem der vorhergehenden Ansprüche, bei dem die Bewegung der beweglichen Teile des Rahmens ausgelöst wird, wenn das Glas eine bestimmte Temperatur erreicht hat.

## Claims

1. Method for the gravity bending of glass sheets, wherein one or more glass sheets (13) are disposed on a frame, the profile of which at the end of the process corresponds to the profile that the sheet(s) are intended to have at their periphery, the frame being of the type with movable lateral parts (5, 6), which pass from a position known as the "open" position at the start of the process to a position known as the "closed" position at the end of this same process, the frame bearing the glass sheet (s) is introduced into a furnace in which the temperature is raised progressively up to the softening temperature of the glass, which deforms under its own weight so as to peripherally match the shape of the frame, and wherein, when the final shape has been achieved, the temperature is reduced rapidly in order to solidify the glass, said method being **characterized in that** the movement of the lateral parts of the frame is, at least in part, controlled independently of the state of softening of the glass, and wherein the movement of the lateral parts (5, 6) of the frame is slowed down compared with the movement that would follow the softening of the glass alone.

2. Method according to Claim Claim 1, wherein the movement of the lateral parts (5, 6) of the frame is started after the curvatures, apart from those that correspond to this movement, have been practically completed.

3. Method according to either of the preceding claims, wherein the movement of the lateral parts (5, 6) of the frame is effected sufficiently rapidly for the bending obtained before this movement not to change substantially during or after this movement.

4. Method according to one of the preceding claims, wherein, immediately after the movement of the lateral parts (5, 6) of the frame, the cooling of the glass is carried out.

5. Method according to Claim 1, wherein the movement of the lateral parts (5, 6) of the frame has several steps, a first partial movement being carried out so as to reduce the discontinuity of curvature of the glass brought about at the junction between the fixed parts and the movable lateral parts (5, 6) of the frame.

6. Method according to Claim 5, wherein the first partial movement is effected by the combined action of the softening of the glass and the counterweight action.

7. Method according to one of the preceding claims, wherein the frame has, on its the movable parts (5, 6), one or more double sets (24, 12) of supports, these supports acting one after another in order to support the glass at the periphery thereof, and in a succession that brings about an increasingly curved profile.

8. Method according to Claim 7, wherein the final movement of the movable lateral parts is realized after the successive supports (24, 12) carried by these movable lateral parts have been employed until the most curved profile has been obtained along these movable parts.

9. Method according to Claim 5 or Claim 6 and Claim 7, wherein a first support of limited curvature supports the glass along at least a part of the movable parts of the frame at the end of the first partial movement of these movable parts, this first support then being retracted in order to release a support of greater curvature and free the glass for the rest of the movement of the movable parts.

10. Method according to any one of the preceding claims, wherein the movement of the movable parts of the frame is triggered when the glass reaches a given temperature.
